# EUROPÄISCHE PATENTANMELDUNG

(11) **EP 4 737 750 A1**
(43) Veröffentlichungstag der Anmeldung: **06.05.2026**
(21) Anmeldenummer: 25206765.7
(22) Anmeldetag: 06.10.2025
(51) Int. Cl.: F16C 3/02

(54) **VERLIERSICHERUNG FÜR STEHBOLZEN EINES WELLENFLANSCHES**

(30) Priorität: 30.10.2024 DE 102024210462
(71) Anmelder: ZF Friedrichshafen AG, 88046 Friedrichshafen (DE); ZF Wind Power Antwerpen NV, 3920 Lommel (BE)
(72) Erfinder: Francis, Pieterjan, 3450 Geetbets (BE); Sperlich, Ralf, 58452 Witten (DE); Wiese, Matthias, 44263 Dortmund (DE)
(74) Vertreter: ZF Friedrichshafen AG

(57) **Zusammenfassung**

Die Erfindung betrifft eine Anordnung mit einer ersten Welle (101), einer zweiten Welle (103) und einem Ring (115); wobei die erste Welle (101) einen ersten Flansch (105) mit durchgehenden Löchern (111) und die zweite Welle (103) einen zweiten Flansch (107) mit Stehbolzen (109) aufweist; wobei die Stehbolzen (109) sich jeweils durch ein Loch (111) des ersten Flansches (105) und ein Loch (119) des Rings (115) erstrecken und jeweils eine erste Mutter (113) aufweisen, die axial zwischen dem ersten Flansch (105) und dem Ring (115) angeordnet und gegen den ersten Flansch (105) verschraubt ist; wobei mindestens zwei Stehbolzen (109) jeweils eine gegen den Ring (115) verschraubte zweite Mutter (121) aufweisen. Jeweils ein Sicherungsmittel (123) ist in dem Ring (115) fixiert und bildet ein axiales Wiederlager für die jeweilige zweite Mutter (121).

## Beschreibung

Die Erfindung betrifft eine Anordnung nach dem Oberbegriff von Anspruch 1.

Aus CN 1 17 605 751 ist eine Flanschverbindung mit Stehbolzen bekannt. Ein erster Flansch weist Stehbolzen auf, die sich durch Löcher eines zweiten Flansches hindurch erstrecken. Auf die Stehbolzen sind Muttern aufgeschraubt, die den zweiten Flansch gegen den ersten Flansch verspannen. Als Verliersicherung für die Muttern sind scheibenförmige Elemente vorgesehen. Diese sind mit weiteren Muttern auf den Stehbolzen verschraubt. Als Verliersicherung für die weiteren Muttern weisen die scheibenförmigen Elemente an den Kontaktflächen mit den weiteren Muttern keilförmige Erhöhungen auf. Damit sich die keilförmigen Erhöhungen nicht verformen und wirkungslos werden, muss die Verliersicherung aus einem härteren Material bestehen als die weiteren Muttern. Dies schränkt die Auswahl der möglichen Werkstoffe ein und führt im Ergebnis zu einer signifikanten Erhöhung der Kosten.

Der Erfindung liegt die Aufgabe zugrunde, eine gegenüber dem Stand der Technik verbesserte Verliersicherung verfügbar zu machen. Diese Aufgabe wird gelöst durch eine Anordnung nach Anspruch 1. Bevorzugte Weiterbildungen sind in den Unteransprüchen enthalten und ergeben sich aus nachfolgender Beschreibung sowie der Figur.

Die erfindungsgemäße Anordnung umfasst eine erste Welle, eine zweite Welle und einen Ring. Eine Welle bezeichnet ein drehbar gelagertes Maschinenelement zur Übertragung von Drehbewegungen und -momenten längs einer Drehachse der Welle.

Ein Ring ist ein Mittel, das die Form eines Toroids hat.

Bevorzugt ist die erfindungsgemäße Anordnung als Teil eines Getriebes ausgebildet.

Die erste Welle weist einen ersten Flansch und die zweite Welle einen zweiten Flansch auf. Der erste Flansch und der zweite Flansch bilden eine Flanschverbindung, über welche die beiden Wellen drehfest miteinander verbunden sind, sodass sie um eine gemeinsame Drehachse drehbar sind.

Der erste Flansch weist durchgehende Löcher, das heißt Löcher mit jeweils zwei Mündungen, auf. Die Löcher sind vorzugsweise rotationssymmetrisch um die Drehachse herum angeordnet.

In dem zweiten Flansch befinden sich zu den Löchern des ersten Flanschs korrespondierende Stehbolzen. Im Einzelnen weist der zweite Flansch Stehbolzen auf, die sich jeweils durch ein Loch des ersten Flansches erstrecken.

Die Stehbolzen weisen jeweils eine erste Mutter auf. Diese ist auf dem jeweiligen Stehbolzen aufgeschraubt und gegen den ersten Flansch verschraubt. In axialer Richtung, d.h. in einer parallel zu der obengenannten Drehachse verlaufenden Richtung, ist der erste Flansch also zwischen der jeweiligen ersten Mutter und dem zweiten Flansch angeordnet. Durch die Verschraubung wird der erste Flansch zwischen der jeweiligen ersten Mutter und dem zweiten Flansch verspannt.

Der Ring dient als Verliersicherung. Dazu weist auch der Ring durchgehende Löcher auf. Jeder Stehbolzen erstreckt sich nicht nur durch ein Loch des ersten Flansches, sondern auch durch ein Loch des Rings. Die jeweilige erste Mutter ist axial zwischen dem ersten Flansch und dem Ring angeordnet. Der erste Flansch und der Ring befinden sich also auf gegenüberliegenden axialen Seiten der jeweiligen ersten Mutter. Im Einzelnen sind der Ring und die jeweilige erste Mutter und damit auch der erste Flansch auf unterschiedlichen Seiten einer radial, das heißt orthogonal zu der obengenannten Drehachse ausgerichteten ersten Ebene angeordnet. Der erste Flansch und die jeweilige erste Mutter und damit auch der Ring sind auf unterschiedlichen Seiten einer zweiten, radial ausgerichteten Ebene angeordnet. Zwischen der ersten Ebene und der zweiten Ebene befindet sich die jeweilige erste Mutter.

Neben der ersten Mutter weisen die Stehbolzen jeweils eine zweite Mutter auf, die gegen den Sicherungsring verschraubt ist. Dadurch bildet die jeweilige zweite Mutter ein axiales Widerlager für den Sicherungsring. Der Sicherungsring wiederum bildet ein axiales Widerlager für die jeweilige erste Mutter und damit für den jeweiligen Stehbolzen. Sollte ein Stehbolzen brechen oder dessen erste Mutter sich lösen, verhindert der Ring somit, dass die erste Mutter und gegebenenfalls der Stehbolzen in das Getriebe gelangen. Dabei wird der Ring durch die übrigen, noch nicht gebrochenen Stehbolzen und nicht gelösten ersten Muttern gehalten.

Um zu verhindern, dass die jeweilige zweite Mutter sich löst und infolgedessen in das Getriebe gelangt, ist erfindungsgemäß jeweils ein Sicherungsmittel vorgesehen, das in dem Ring fixiert ist und ein axiales Widerlager für die jeweilige zweite Mutter bildet. Für jeden Stehbolzen und die jeweilige zweite Mutter ist erfindungsgemäß ein solches Sicherungsmittel vorgesehen.

Die axialen Widerlager bilden eine formschlüssige Verliersicherungen. Aufgrund der formschlüssigen Verbindungen zwischen den Sicherungsmitteln und der jeweiligen zweiten Mutter ist eine solche Lösung besonders zuverlässig und robust.

Das jeweilige Sicherungsmittel ist weiterbildungsgemäß in dem jeweiligen Loch des Rings fixiert. Damit das Sicherungsmittel ein axiales Widerlager für die jeweilige zweite Mutter bilden kann, ist die jeweilige zweite Mutter weiterbildungsgemäß in dem Loch versenkt. Die Löcher des Rings beinhalten also weiterbildungsgemäß neben dem jeweiligen Sicherungsmittel auch die jeweilige zweite Mutter. Die weiterbildungsgemäße Fixierung der Sicherungsmittel in den Löchern des Rings ermöglicht eine besonders einfache Ausgestaltung des Sicherungsmittels.

Als axiales Widerlager für die jeweilige zweite Mutter dient in einer bevorzugten Weiterbildung ein Absatz, der in dem jeweiligen Loch des Rings ausgebildet ist. Durch den Absatz verjüngt sich das zweite Loch. Ein Durchmesser des Lochs im Bereich des Absatzes ist bevorzugt geringer als ein Durchmesser der jeweiligen zweiten Mutter an ihrer weitesten Stelle, das heißt an ihren Ecken. Da der jeweilige Stehbolzen durch das Loch des Rings hindurch verläuft, ist sein Durchmesser geringer als der Durchmesser des Lochs im Bereich des Absatzes.

In einer bevorzugten Weiterbildung ist das Sicherungsmittel formschlüssig in dem jeweiligen Loch des Rings fixiert. Damit ist nicht nur die jeweilige erste Mutter, sondern auch die jeweilige zweite Mutter formschlüssig gesichert. Damit gestaltet sich auch die Sicherung der jeweiligen zweiten Mutter besonders robust und zuverlässig.

Eine entsprechende formschlüssige Fixierung lässt sich in einer darüber hinaus bevorzugten Weiterbildung besonders einfach durch Wahl eines Sicherungsrings als Sicherungsmittel realisieren. Zur formschlüssigen Fixierung in dem jeweiligen Loch des Rings weist dieses weiterbildungsgemäß eine Nut auf. Weiterbildungsgemäß greift der Sicherungsring formschlüssig in diese Nut ein. Als Sicherungsring eignet sich ein herkömmlicher Innensicherungsring.

Bevorzugt sind die erste Welle und die zweite Welle ineinander verschachtelt weitergebildet. Dazu ist die zweite Welle als Hohlwelle weitergebildet. Mindestens ein Abschnitt der ersten Welle ist weiterbildungsgemäß innerhalb der zweiten Welle angeordnet. Dieser Abschnitt der ersten Welle weist den ersten Flansch auf. Durch die weiterbildungsgemäße Verschachtelung der ersten Welle und der zweiten Welle lässt sich die Drehsteifigkeit im Hinblick auf ein verbessertes Schwingungsverhalten modifizieren.

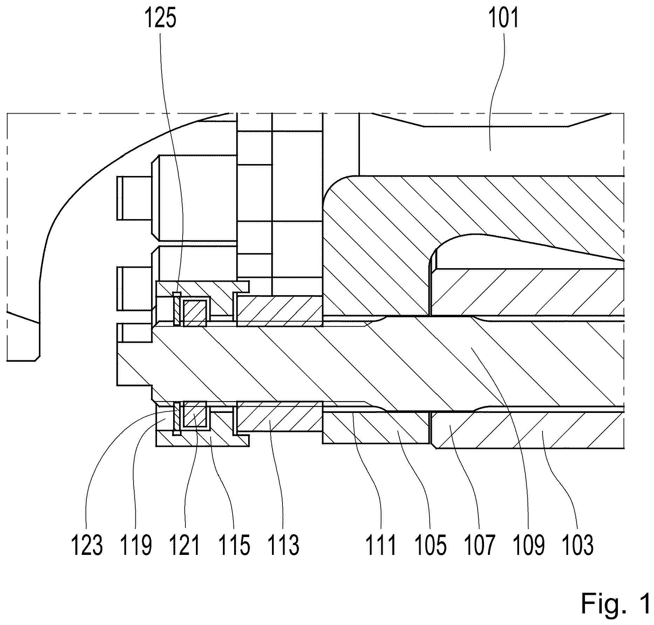

Ein bevorzugtes Ausführungsbeispiel der Erfindung ist in Fig. 1 dargestellt. Im Einzelnen zeigt:
Fig. 1 eine Flanschverbindung.

Die in Fig. 1 dargestellte Flanschverbindung verbindet eine erste Welle 101 drehfest mit einer zweiten Welle 103. Die Flanschverbindung umfasst einen ersten Flansch 105 und einen zweiten Flansch 107. Der erste Flansch 105 wird einstückig durch die erste Welle 101 ausgebildet. Entsprechend wird der zweite Flansch 107 einstückig durch die zweite Welle 103 ausgebildet.

In den zweiten Flansch 107 sind Stehbolzen 109 eingeschraubt. Diese erstrecken sich durch jeweils eine Durchgangsbohrung 111 des ersten Flansches 105.

Auf der dem zweiten Flansch 107 gegenüberliegenden Seite des ersten Flansches 105 befindet sich jeweils eine Mutter 113. Die Muttern 113 sind auf jeweils einen Stehbolzen 109 aufgeschraubt und üben eine axiale Spannkraft auf den ersten Flansch 105 aus. Damit wird der erste Flansch 105 axial gegen den zweiten Flansch 107 verspannt.

Als Verliersicherung ist ein Ring 115 vorgesehen. Dieser weist für jeden Stehbolzen 109 eine durchgehende Aussparung 119 auf, in die der Stehbolzen 109 eingreift. Gegenüber den ersten Muttern 113 bildet der Ring 119 ein axiales Widerlager.

Zur Fixierung des Rings 119 ist jeder Stehbolzen 109 mit einer zweiten Mutter 121 versehen. Die zweiten Muttern 121 sind gegen einen in der jeweiligen Aussparung 119 des Rings 115 verlaufenden Absatz verschraubt.

Bei einem Bruch eines Stehbolzens 109 wird dieser über die erste Mutter 113 und von dem Ring 115 in Position gehalten. Der Ring 115 wiederum ist über die zweiten Muttern 121 der übrigen, nicht gebrochenen Stehbolzen 119 fixiert. Dadurch wird verhindert, dass der gebrochene Stehbolzen 109 in das Getriebe gelangt und dort Schäden verursacht.

Als Verliersicherung für die zweiten Muttern 121 ist jeweils ein Innensicherungsring 123 vorgesehen. Die Innensicherungsringe 123 sind jeweils in eine innerhalb der jeweiligen Aussparung 119 verlaufenden Nut 125 eingesetzt. Die Innensicherungsringe 123 bilden damit ein axiales Widerlager für die jeweilige zweite Mutter 121.

### Bezugszeichen

- 101: Welle
- 103: Welle
- 105: Flansch
- 107: Flansch
- 109: Stehbolzen
- 111: Durchgangsbohrung
- 113: Mutter
- 115: Ring
- 119: Aussparung
- 121: Mutter
- 123: Innensicherungsring
- 125: Nut

## Patentansprüche

1. Anordnung mit einer ersten Welle (101), einer zweiten Welle (103) und einem Ring (115); wobei
die erste Welle (101) einen ersten Flansch (105) mit durchgehenden Löchern (111) und die zweite Welle (103) einen zweiten Flansch (107) mit Stehbolzen (109) aufweist; wobei
die Stehbolzen (109) sich jeweils durch ein Loch (111) des ersten Flansches (105) und ein Loch (119) des Rings (115) erstrecken und jeweils eine erste Mutter (113) aufweisen, die axial zwischen dem ersten Flansch (105) und dem Ring (115) angeordnet und gegen den ersten Flansch (105) verschraubt ist; und wobei mindestens zwei Stehbolzen (109) jeweils eine gegen den Ring (115) verschraubte zweite Mutter (121) aufweisen; **gekennzeichnet durch**
jeweils ein Sicherungsmittel (123), das in dem Ring (115) fixiert ist und ein axiales Wiederlager für die jeweilige zweite Mutter (121) bildet.

2. Anordnung nach Anspruch 1; **dadurch gekennzeichnet, dass**
die jeweilige zweite Mutter (121) in dem jeweiligen Loch (119) des Rings (115) versenkt ist; wobei
in dem jeweiligen Loch (119) des Rings (115) das jeweilige Sicherungsmittel (123) fixiert ist.

3. Anordnung nach dem vorhergehenden Anspruch; **gekennzeichnet durch** einen Absatz in dem jeweiligen Loch (119) des Rings (119), der das axiale Wiederlager für die jeweilige zweite Mutter (121) ausbildet.

4. Anordnung nach einem der Ansprüche 2 oder 3; **dadurch gekennzeichnet, dass** das jeweilige Sicherungsmittel (123) formschlüssig in dem jeweiligen Loch (119) des Rings (115) fixiert ist.

5. Anordnung nach dem vorhergehenden Anspruch;
das jeweilige Sicherungsmittel (123) als Sicherungsring ausgebildet ist, der in einer Nut (125) desjeweiligen Lochs (119) des Rings (115) fixiert ist.

6. Anordnung nach einem der vorhergehenden Ansprüche; **dadurch gekennzeichnet, dass**
die zweite Welle (103) als Hohlwelle ausgestaltet ist; wobei
mindestens ein Abschnitt der ersten Welle (101), der den ersten Flansch (105) aufweist, innerhalb der zweiten Welle (103) angeordnet ist.
